Europäisches Patentamt

European Patent Office

Office européen des brevets

(19)

(11) Veröffentlichungsnummer : **0 135 001**
**B1**

(12) **EUROPÄISCHE PATENTSCHRIFT**

(45) Veröffentlichungstag der Patentschrift :
03.12.86

(21) Anmeldenummer : 84108119.3

(22) Anmeldetag : 11.07.84

(51) Int. Cl.⁴ : **B 65 G 35/00, B 60 L 5/08,
B 62 D 1/26**

(54) Automatisches Flurfördersystem.

(30) Priorität : 27.08.83 DE 3330993

(43) Veröffentlichungstag der Anmeldung :
27.03.85 Patentblatt 85/13

(45) Bekanntmachung des Hinweises auf die Patenterteilung : 03.12.86 Patentblatt 86/49

(84) Benannte Vertragsstaaten :
AT BE CH FR GB IT LI LU NL SE

(56) Entgegenhaltungen :
AT-B- 163 572
CH-A- 560 149

(73) Patentinhaber : Bryda, Roland
Wehlauerstrasse 53
D-7500 Karlsruhe 1 (DE)

(72) Erfinder : Bryda, Roland
Wehlauerstrasse 53
D-7500 Karlsruhe 1 (DE)

(74) Vertreter : Brommer, Hans Joachim, Dr.-Ing. et al
Patentanwälte Dipl.-Ing. R. Lemcke Dr.-Ing. H.J. Brommer Amalienstrasse 28 Postfach 4026
D-7500 Karlsruhe 1 (DE)

EP 0 135 001 B1

## Beschreibung

Die Erfindung betrifft ein automatisches Flurfördersystem, bestehend aus einem selbstfahrenden, elektrisch betriebenen Transportfahrzeug, das über eine Verbindungsstange mit unterhalb des Deckenbereiches verlegten Strom- und Steuerschienen verbunden ist, wobei die Verbindungsstange beim Fahren des Fahrzeuges an diesen Schienen entlangläuft und das Fahrzeug entsprechend dem Steuerschienenverlauf lenkt (bekannt aus AT-B-163 572).

Derartige Flurfördersysteme beziehen ihre Antriebsenergie aus einer Schleifleitung, die je nach örtlichen Gegebenheiten in etwa 3 bis 4 m Höhe angeordnet ist. Die Führung des Fahrzeuges erfolgt durch die im allgemeinen mit den Stromschienen kombinierten Steuerschienen in der Weise, daß der Schienenkurs unmittelbar über die Verbindungsstange auf die Lenkorgane des Transportfahrzeuges übertragen wird.

Der Vorteil dieses Systems liegt vor allem darin, daß keine kostspieligen und großen Batterien benötigt werden und daß die Fahrzeuge im Dauerbetrieb eingesetzt werden können. Außerdem werden keine im Boden verlegten Kabel benötigt, wie es bei induktiv gesteuerten Fahrzeugen notwendig ist.

Andererseits besteht ein gewisser Nachteil des Fördersystems, gleichgültig, ob die Lenkung mechanisch über Steuerschienen und eine Verbindungsstange oder berührungslos durch Induktion erfolgt — darin, daß Änderungen in der Streckenführung nur mit erheblichem baulichem Aufwand durchzuführen sind. Denn in diesem Fall muß das gesamte Leitsystem demontiert und entsprechend dem gewünschten neuen Fahrkurs versetzt werden. Auf der anderen Seite wären Änderungen der Streckenführung häufig wünschenswert, beispielsweise wenn sich der Fertigungsablauf in einer Produktkette ändert, wenn einzelne Maschinen umgestellt werden oder wenn der Fahrweg des Transportfahrzeuges kurzzeitig oder teilweise als Abstellfläche benötigt wird.

Hiervon ausgehend, liegt die Aufgabe der vorliegenden Erfindung darin, das eingangs beschriebene Flurfördersystem dahingehend zu verbessern, daß Änderungen in der Streckenführung wesentlich einfacher durchzuführen sind. Insbesondere soll das bisher notwendige vollständige Demontieren und Neumontieren des gesamten Schienensystems entfallen.

Diese Aufgabe wird erfindungsgemäß dadurch gelöst, daß eine weitere Bahnkurve im Schienenbereich angeordnet ist, daß diese Bahnkurve auf ein an der Verbindungsstange oder am Laufwagen beweglich geführtes Referenzglied einwirkt, daß Verstellungen des Referenzgliedes relativ zur Verbindungsstange durch eine die Fahrzeuglenkung betätigende Regeleinheit auf null zurückführbar sind, so daß die Ausgangslage von Verbindungsstange zum Referenzglied wiederhergestellt ist, und daß die längenverstellbare Verbindungsstange oben und unten quer zur Fahrtrichtung schwenkbar gelagert ist.

Die erfindungsgemäße Lösung beruht auf dem Gedanken, die bisherige, starre Verbindung zwischen dem Transportfahrzeug und den Steuerschienen aufzugeben, so daß das Fahrzeug auf einem von Steuerschienenverlauf deutlich abweichenden Kurs fahren kann. Da die Verbindungsstange schwenkbar und längenverstellbar ist, besteht ohne großen konstruktiven Aufwand an der Verbindungsstange eine große Varianzbreite. Das Ausmaß der Kursabweichungen wird von der zusätzlichen Bahnkurve gesteuert, indem sie, beispielsweise durch ihre Lage oder andere abfühlbare Kenngrößen das erforderliche Steuerkommando für die Fahrzeuglenkung gibt. Das Referenzglied fungiert dabei als Sollwertgeber für den Lenkeinschlag. Die Lenkung kann dadurch auf einen von den Steuerschienen abweichenden Kurs eingestellt und mittels der Regeleinheit auf dem von der Bahnkurve vorgegebenen Kurs gehalten werden, bei dem die ursprüngliche Zuordnung zwischen Referenzglied und Verbindungsstange wieder hergestellt ist.

Ein weiterer Vorteil der erfindungsgemäßen Lösung besteht darin, daß auch bei einem Fahrzeugkurs entsprechend dem Steuerschienenverlauf die Bahnkurve stets als Sollwertgeber zur Verfügung steht, um etwaige Kursänderungen, beispielsweise durch Bodenunebenheiten, auszuregeln. Denn bei derartigen ungewollten Kursabweichungen kommt es durch die Verlagerung der Verbindungsstange ebenfalls zu Relativbewegungen zwischen ihr und dem Referenzglied, die von der Regeleinheit erfaßt und auf null zurückgeführt werden.

Die Bahnkurve kann sowohl mit der Steuerschiene integriert sein wie auch als separate Schiene ausgebildet sein. Letzteres bietet den Vorteil, daß das Einstellen vor Ort und auch das spätere Verstellen zwecks Kursänderung leichter durchzuführen ist.

Das Referenzglied wird zweckmäßig abrollend längs der Bahnkurve geführt, wobei die Bahnkurve als Stütze fungiert, so daß es deren Lageänderungen abzufühlen vermag.

In der Praxis hat es sich als besonders günstig erwiesen, die Bahnkurve zur Erzeugung von gegenüber dem Steuerschienenverlauf abweichenden Kurvenfahrten in Vertikalrichtung zu neigen, d. h., daß die Bahnkurve in einer Vertikalebene parallel zu den Steuerschienen nach oben oder unten versetzt verläuft. Der Versatz nach oben entspricht dabei beispielsweise einer Kursabweichung des Fahrzeuges relativ zu den Steuerschienen nach links, der Versatz nach unten einer Kursabweichung nach rechts, während die Bahnkurve in ihrer Mittellage den Transportwagen getreu dem Verlauf der Steuerschienen führt. Eine derartige durchgehende Bahnkurve bietet den Vorteil, daß die bisher übliche, von den Steuerschienen abgeleitete mechanisch-starre Zwangslenkung durchgehend ersetzt wird durch eine von der Regeleinheit gesteuerte Lenkung. Das bedeutet, daß die Bahnkurve während der gesamten Streckenführung, gleichgültig, ob sie vom Steuerschienenverlauf abweicht oder nicht, den Sollwert für die Fahrzeuglenkung vorgibt und daß die Regeleinheit die Lenkung so betätigt, daß dieser von der Bahnkurve vorgegebene Sollwert im Rahmen der üblichen Regelabweichungen eingehalten wird.

Die von der Bahnkurve ausgeübte Relativbewegung des Referenzgliedes relativ zur Verbindungsstange bzw. die von der Verbindungsstange ausgehende Relativbewegung relativ zum Referenzglied kann konstruktiv in vielfacher Weise erzeugt und gemessen werden. Beispielsweise kann das Referenzglied als Tauchanker ausgebildet sein, der mit einem an der Verbindungsstange montierten Magneten zusammenwirkt, so daß sich Höhenänderungen der Bahnkurve in der Eintauchtiefe und der hierzu gehörenden Spulenspannung bemerkbar machen. Weicht diese Spulenspannung von vorgegebenen Sollwert ab, so wird die Lenkung des Transportfahrzeuges entsprechend betätigt, bis durch eine entsprechende Kurvenfahrt die Eintauchtiefe wieder den Sollwert erreicht, d. h., bis sich das Transportfahrzeug wieder auf dem gewünschten Kurs befindet.

Eine konstruktiv besonders günstige Ausführungsform ist dadurch gekennzeichnet, daß das Referenzglied schwenkbar an der Verbindungsstange gelagert ist und seine Schwenkposition als Sollwert für die Regeleinheit fungiert und daß das Schwenklager der Verbindungsstange an einem an den Schienen laufenden Führungswagen am oberen Ende der Verbindungsstange angeordnet ist. Zweckmäßig ist dabei am Schwenklager ein Weg- oder Winkelmeßsystem angeordnet, um die von der Bahnkurve ausgelösten Schwenkbewegungen des Referenzgliedes zu erkennen und um die Regeleinheit entsprechend anzusteuern.

Schließlich bietet die Erfindung den Vorteil, die Regeleinheit zur Lenkung des Transportfahrzeuges zusätzlich durch einen äußeren Speicher ansteuern zu können. Dies empfiehlt sich insbesondere, wenn abrupte Lenkmanöver durchgeführt werden sollen, beispielsweise ein 90°-Einschlag an den lenkbaren Laufrädern des Fahrzeuges, um mit geringstem Platzbedarf ein eine Warteposition zum Be- und Entladen einzufahren oder wenn beispielsweise das selbständige Laden oder Entladen des Fahrzeuges ausgelöst werden soll.

Der Übergang von der Bahnkurven-Lenkung auf die Speicherlenkung kann beispielsweise extern über Spannungs- oder Stromimpulse ausgelöst werden.

Selbstverständlich liegt es im Rahmen der Erfindung, anstelle einer starren Verbindungsstange eine Kabelverbindung zu verwenden, wenn durch entsprechende Vorspannung, beispielsweise durch eine unter Federkraft stehende Kabeltrommel im Fahrzeug, sichergestellt ist, daß die Kabelverbindung dazu geeignet ist, entsprechend dem Kurs des Transportfahrzeuges eine definierte Lage relativ zum Referenzglied einzunehmen.

Ein konkretes Ausführungsbeispiel der Erfindung wird nachfolgend anhand der Zeichnung beschrieben ; dabei zeigt :

Figur 1 eine Ansicht des Transportfahrzeuges mit den zugehörigen Strom- und Steuerschienen in Fahrtrichtung gesehen ;

Figur 2 eine Seitenansicht gemäß Fig. 1 ;

Figur 3 eine Ansicht ähnlich Fig. 1, jedoch mit vom Steuerschienenverlauf abweichender Streckenführung und

Figur 4 das Ablaufschema der Regeleinheit.

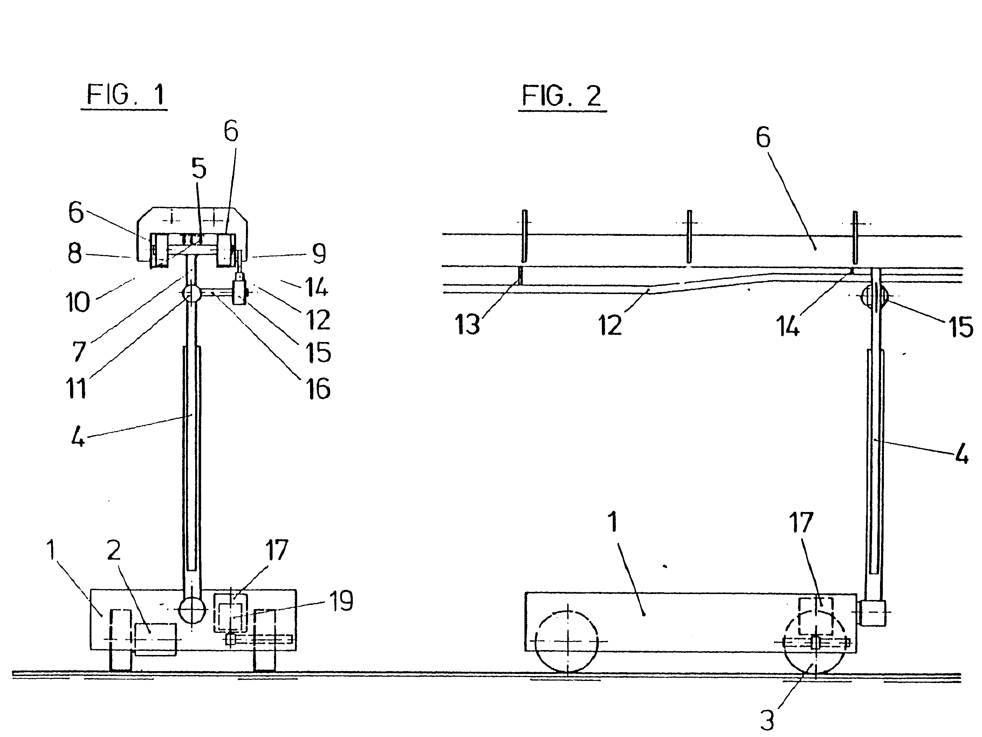

Die Fig. 1 bis 3 zeigen jeweils ein Transportfahrzeug 1, das mit einer elektrischen Antriebseinheit 2 ausgerüstet ist und dessen Laufräder 3 zumindest teilweise lenkbar sind.

Zur Stromversorgung und zur Steuerung ist der Transportwagen 1 über eine Verbindungsstange 4 mit Strom- und Steuerschienen 5 bzw. 6 verbunden. Die Verbindungsstange 4 ist teleskopartig ausgebildet und an ihrem unteren Ende allseits schwenkbar am Transportwagen 1 angelenkt. Ihr oberes Ende ist als Laufwagen 7 ausgebildet, dessen axial benachbarte Laufräder 8 und 9 in entsprechenden, einander gegenüberstehenden Steuerschienen 6 laufen. Außerdem trägt der Laufwagen 7 Schleifkontakte 10, die die elektrische Verbindung zwischen der Stromschiene 5 und dem Antriebsmotor 2 herstellen.

Die Verbindung des Laufwagens 7 mit der Verbindungsstange 4 erfolgt über ein Gelenk 11, das Schwenkbewegungen zumindest quer zur Fahrtrichtung zuläßt.

An den zu einer Einheit zusammengefaßten Strom- und Steuerschienen 5 bzw. 6 ist außerdem eine Bahnkurve 12 montiert. Diese Bahnkurve 12 ist beispielsweise über Laschen 13 und 14 leicht höhenverstellbar. Außerdem ist sie auf einfache Weise abschnittweise austauschbar. An ihrer Unterseite läuft ein Referenzglied in Form einer Rolle 15 ab. Die Rolle 15 ist über einen Arm 16 vertikal verschwenkbar an dem Gelenk 11 gelagert. Außerdem befindet sich an dem Gelenk 11 eine Winkelmeßeinrichtung für den Winkel a zwischen dem Arm 16 und der Verbindungsstange 4.

Die Funktion ist folgende : Bei der in den Fig. 1 und 2 dargestellten Position des Transportwagens 1 befindet sich die Bahnkurve 12 auf einer mittleren Höhe, d. h., daß kein vom Steuerschienenverlauf abweichender Kurs des Fahrzeuges erwünscht ist. Es befindet sich dann genau unterhalb der Strom- und Steuerschienen 5 bzw. 6. Der Winkel a zwischen dem Hebel 16 und der Verbindungsstange 4 möge in diesem Fall genau 90° betragen.

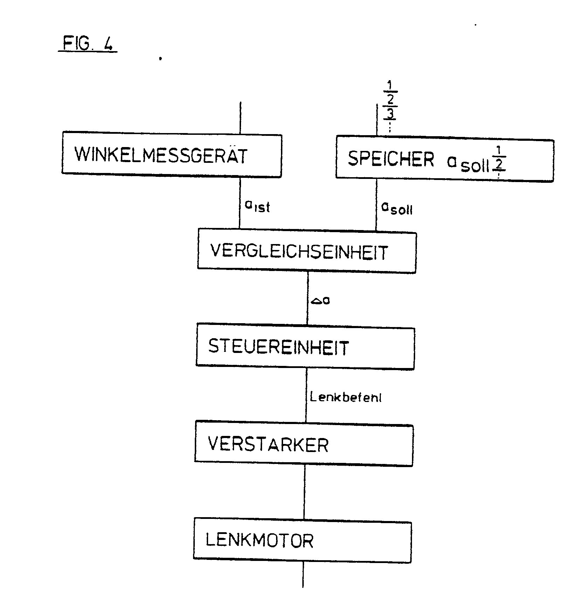

Die Beibehaltung dieses Kurses wird von einer Regeleinheit überwacht, deren Ablaufschema sich aus Fig. 4 ergibt. Zeigt das Winkelmeßgerät für den Winkel a genau 90°, so befindet sich das Fahrzeug auf Kurs und es ist keine Lenkkorrektur notwendig. Weicht der Winkel jedoch von diesem Sollwert ab, so wird dieser Fehler von der Vergleichseinheit des Reglers erkannt und die Steuereinheit gibt einen entsprechenden Lenkbefehl auf den in Fig. 1 angedeuteten Lenkmotor 17 im Sinne einer Rückführung des Winkelfehlers auf den Wert null.

Soll das Fahrzeug 1 hingegen auf einen von den Steuerschienen abweichenden Kurs gebracht werden, so wird die Bahnkurve 12 in ihrem Niveau entsprechend verlagert, in Fig. 2 beispielsweise nach unten gezogen. Dadurch wird auch das Referenzglied in Form der Rolle 15 nach unten geschwenkt und der Winkel a verkleinert sich. Das Winkelmeßgerät am Gelenk 11 gibt diesen neuen Winkelwert in die Vergleichseinheit, die entsprechend der Abweichung über die nachfolgende Steuereinheit des Reglers einen Lenkbefohl an den Lenkmotor 17 gibt in dem Sinne, daß der Winkel a wieder 90° einnimmt. Das Fahrzeug fährt dann mit einem bestimmten seitlichen Versatz parallel zu den Steuerschienen 6.

Soll das Fahrzeug wieder auf den Steuerkurven-Kurs zurückgeführt werden, so wird die Bahnkurve 12 wieder auf das alte Niveau angehoben, worauf sich automatisch über die Regeleinheit die entsprechenden Änderungen im Lenkeinschlag des Fahrzeuges einstellen.

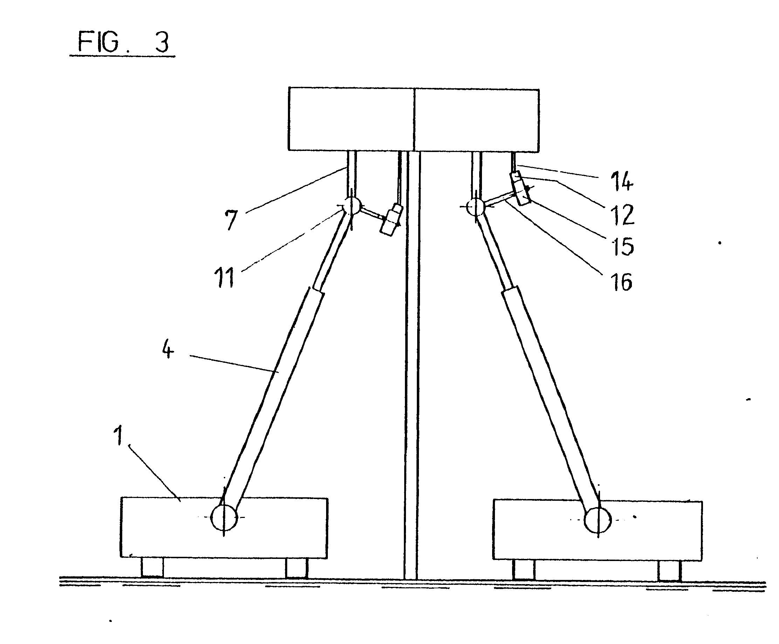

Fig. 3 zeigt ein Anwendungsbeispiel, wo die Strom- und Steuerschienen 5 und 6 auf Stützen 18 montiert sind. In diesem Fall muß das Transportfahrzeug 1 durchweg unter einem gewissen seitlichen Versatz relativ zu den Strom- und Steuerschienen laufen. Sind die Stützen weit genug auseinander, so kann das Transportfahrzeug 1 aber durchaus auch quer unter den Strom- und Steuerschienen hindurchfahren.

Schließlich zeigt Fig. 4 noch die Möglichkeit, anstelle des festen 90°-Sollwertes mit anderen Sollwerten zu arbeiten, die der Regeleinheit aus einem Speicher zugeführt werden. Die gespeicherten Winkelwerte können entsprechend der Fahrstrecke vorprogrammiert sein und automatisch, etwa wegabhängig oder extern durch Spannungssignale dem Regler zugeführt werden. Der Speicher kann sich dabei sowohl im Fahrzeug als auch außerhalb befinden. Auf diese Weise läßt sich somit der von der Kurvenbahn 12 vorgegebene Sollwert durch einen Speicherwert ersetzen. Das bedeutet, daß insoweit auch ohne Höhenverlagerung der Bahnkurve 12 Kursänderungen des Transportfahrzeuges 1 möglich sind, nämlich allein aufgrund der eingespeicherten Sollwerte.

Die in den Ausführungsbeispielen beschriebene Winkelmessung kann selbstverständlich auch durch eine Wegmessung an relativ zueinander bewegten Teilen ersetzt werden.

Zusammenfassend besteht der Vorteil der vorliegenden Erfindung darin, daß man ein batterieunabhängiges Flurfördersystem erhält, das keine starre Zuordnung mehr zu seinen Strom- und Steuerschienen hat, sondern auch vom Steuerschienenverlauf abweichende Kurvenfahrten ausführen kann.

**Patentansprüche**

1. Automatisches Flurfördersystem, bestehend aus einem selbstfahrenden, elektrisch betriebenen Transportfahrzeug (1), das über eine Verbindungsstange (4) od dgl. mit unterhalb des Deckenbereiches verlegten Strom- und Steuerschienen (5 bzw. 6) verbunden ist, wobei die Verbindungsstange (4) beim Fahren des Fahrzeuges (1) an diesen Schienen (5 bzw. 6) entlangläuft und das Fahrzeug (1) entsprechend dem Steuerschienenverlauf lenkt, dadurch gekennzeichnet, daß eine weitere Bahnkurve (12) im Schienenbereich angeordnet ist, daß diese Bahnkurve (12) auf ein an der Verbindungsstange (4), oder am Laufwagen (7) beweglich geführtes Referenzglied (15) relativ zur Verbindungsstange (4) durch eine die Fahrzeuglenkung (17) betätigende Regeleinheit (19) auf null zurückführbar sind, so daß die Ausgangslage von Verbindungsstange (4) zum Referenzglied (15) wiederhergestellt ist, und daß die längenverstellbare Verbindungsstange (4) oben und unten zumindest quer zur Fahrtrichtung schwenkbar gelagert ist.

2. Flurfördersystem nach Anspruch 1, dadurch gekennzeichnet, daß die Bahnkurve mit der Steuerschiene integriert ist.

3. Flurfördersystem nach Anspruch 1, dadurch gekennzeichnet, daß die Bahnkurve als separate Schiene (12) ausgebildet ist.

4. Flurfördersystem nach einem der vorhergehenden Ansprüche, dadurch gekennzeichnet, daß das Referenzglied (15) auf der Bahnkurve (12) abrollend geführt ist.

5. Flurfördersystem nach einem der vorhergehenden Ansprüche, dadurch gekennzeichnet, daß die Bahnkurve (12) zur Erzeugung von gegenüber dem Steuerschienenverlauf (6) abweichenden Kurvenfahrten in Vertikalrichtung versetzt ist.

6. Flurfördersystem nach einem der vorhergehenden Ansprüche, dadurch gekennzeichnet, daß das Referenzglied (15) schwenkbar an der Verbindungsstange (4) gelagert ist und seine Schwenkposition als Sollwert für die Regeleinheit fungiert.

7. Flurfördersystem nach Anspruch 6, dadurch gekennzeichnet, daß das Schwenklager (11) an einem an den Steuerschienen (6) laufenden Führungswagen (7) am oberen Ende der Verbindungsstange (4) angeordnet ist.

8. Flurfördersystem nach Anspruch 6 oder 7, dadurch gekennzeichnet, daß das Schwenklager (11) ein Winkelmeßsystem trägt.

9. Flurfördersystem nach einem der vorhergehenden Ansprüche, dadurch gekennzeichnet, daß die Regeleinheit zusätzlich durch einen äußeren Speicher ansteuerbar ist.

10. Flurfördersystem nach einem der vorhergehenden Ansprüche, dadurch gekennzeichnet, daß anstelle der Verbindungsstange (4) ein gespanntes Kabel vorgesehen ist.

**Claims**

1. An automatic transporter system, comprising

 0 135 001                                           8

an automotive, electrically driven transporter vehicle (1), which is connected by means of a connection rod (4) or the like to contact and guide tracks (5 or 6) disposed below the cover region, the connection rod (4) running along the said tracks (5 or 6) when the vehicle (1) is in motion and guiding the vehicle according to the guide track course, characterised in that an additional track curve (12) is arranged in the track area, that this track curve (12) acts on a reference member (15) guided displaceably on the connection rod (4) or on the bogie truck (7), that adjustments of the reference member (15) relative to the connection rod (4) can be reset to zero by a regulator unit (19) which actuates the vehicle steering system (17), so that the starting position of the connection rod (4) relative to the reference member (15) is reestablished, and that the longitudinally adjustable connection rod (4) is disposed so as to pivot up and down at least transversely to the direction of travel.

2. An automatic transporter system according to claim 1, characterised in that the track curve is integrated with the guide track.

3. An automatic transporter system according to claim 1, characterised in that the track curve is designed as a separate track (12).

4. An automatic transporter system according to any one of the preceding claims, characterised in that the reference member (15) is guided so as to roll on the track curve (12).

5. An automatic transporter system according to any one of the preceding claims, characterised in that the track curve (12) is displaced in a vertical direction to produce cornering deviating from the guide track course (6).

6. An automatic transporter system according to any one of the preceding claims, characterised in that the reference member (15) is disposed pivotally on the connection rod (4) and its pivot position functions as a set value for the regulator unit.

7. An automatic transporter system according to claim 6, characterised in that the pivot bearing (11) is disposed on a guide wagon (7) running on the guide tracks (6) at the upper end of the connection rod (4).

8. An automatic transporter system according to claim 6 or 7, characterised in that the pivot bearing (11) supports an angle measuring system.

9. An automatic transporter system according to any one of the preceding claims, characterised in that the regulator unit can additionally be driven by an external storage battery.

10. An automatic transporter system according to any one of the preceding claims, characterised in that a tensioned cable is provided instead of the connection rod (4).


## Revendications

1. Système de transport automatique au sol, se composant d'un véhicule de transport automobile (1), entraîné électriquement, qui est relié par l'intermédiaire d'une barre de liaison (4) avec des rails d'alimentation en courant et de commande (5 et 6) qui sont placés en dessous de la zone de couverture, la barre de liaison (4) se déplaçant le long de ces rails (5 et 6) pendant la marche du véhicule (1) et le véhicule (1) étant dirigé en correspondance au profil des rails de commande (5 et 6), caractérisé en ce qu'une autre voie de guidage (12) est disposée dans la zone des rails, en ce que cette voie de guidage (12) agit sur un organe de référence (15) guidé dans son mouvement sur la barre de liaison (4) ou sur un chariot mobile (7), en ce que des déplacements de l'organe de référence (15) par rapport à la barre de liaison (4) peuvent faire l'objet d'un retour à l'état initial sous l'impulsion d'une unité de régulation (19) actionnant la direction du véhicule (17), de manière que la position initiale de la barre de liaison (4) par rapport à l'organe de référence (15) soit rétablie, et en ce que la barre de liaison (4) déplaçable longitudinalement est montée de façon à pouvoir pivoter vers le haut et vers le bas perpendiculairement à la direction de marche.

2. Système de transport au sol selon la revendication 1, caractérisé en ce que la voie de guidage est intégrée au rail de commande.

3. Système de transport au sol selon la revendication 1, caractérisé en ce que la voie de guidage est réalisée sous la forme d'un rail séparé (12).

4. Système de transport au sol selon une des revendications précédentes, caractérisé en ce que l'organe de référence (15) est guidé par roulement sur la voie de guidage (12).

5. Système de transport au sol selon une des revendications précédentes, caractérisé en ce que la voie de guidage (12) est décalée en direction verticale pour établir des trajectoires s'écartant de la trajectoire (6) définie par le rail de commande.

6. Système de transport au sol selon une des revendications précédentes, caractérisé en ce que l'organe de référence (15) est monté de façon pivotante sur la barre de liaison (4) et sa position de pivotement est utilisée comme valeur de consigne pour l'unité de régulation.

7. Système de transport au sol selon la revendication 6, caractérisé en ce que le palier de pivotement (11) est disposé sur un chariot de guidage (7) situé à l'extrémité supérieure de la barre de liaison (4) et se déplaçant sur le rail de commande (6).

8. Système de transport au sol selon la revendication 6 ou 7, caractérisé en ce que le palier de pivotement (11) porte un système de mesure d'angle.

9. Système de transport au sol selon une des revendications précédentes, caractérisé en ce que l'unité de régulation peut être commandée additionnellement par une mémoire extérieure.

10. Système de transport au sol selon une des revendications précédentes, caractérisé en ce qu'il est prévu à la place de la barre de liaison (4) un câble tendu.

FIG. 2

FIG. 1

FIG. 3

14
12
15
16

7

11

4

1

FIG. 4

WINKELMESSGERÄT

SPEICHER $a_{soll}\frac{1}{2}$

$a_{ist}$

$a_{soll}$

VERGLEICHSEINHEIT

$\triangle a$

STEUEREINHEIT

Lenkbefehl

VERSTARKER

LENKMOTOR